# EUROPEAN PATENT SPECIFICATION

(11) **EP 3 170 867 B1**
(45) Date of publication and mention of the grant of the patent: **04.07.2018**
(21) Application number: 16184979.9
(22) Date of filing: 19.08.2016
(51) Int. Cl.: C08L 67/02

(54) **SOFT PET-G RESIN COMPOSITION WITH IMPROVED PROPERTIES**
WEICHE PET-G-HARZZUSAMMENSETZUNG MIT VERBESSERTEN EIGENSCHAFTEN
COMPOSITION DE RÉSINE PET-G MOLLE À PROPRIÉTÉS AMÉLIORÉES

(30) Priority: 23.11.2015 KR 20150164186
(43) Date of publication of application: 24.05.2017
(73) Proprietor: Youngil Co. Ltd., Gwangju City 464-874 (KR)
(72) Inventor: LEE, Ho-Young, 472-725 Gyonggi-do (KR)
(74) Representative: Richardt Patentanwälte PartG mbB

(56) References cited:
- DATABASE WPI Week 199940 Thomson Scientific, London, GB; AN 1999-479433 XP002768202, & WO 99/40154 A1 (RIKEN TECHNOS CORP) 12 August 1999 (1999-08-12)

## Description

### TECHNICAL FIELD

The present invention relates to a soft glycol-modified polyethylene terephthalate (PET-G) resin composition, and more particularly, to a soft PET-G resin composition that uses paraffin oil or a mixture of paraffin oil and a vegetable oil in addition to a soft PET-G resin composition to enhance heat resistance, cold resistance, weather resistance, and printability.

### BACKGROUND OF THE INVENTION

A composition (called "PET-G elastomer") prepared using a vegetable oil in combination with PET-G resin, MSB resin and TPEE resin displays properties as good as to take over soft PVC products but has a limitation in the preparation of an alternative material with such a good quality as to replace soft PVC due to the characteristics of the vegetable oil (usually, palm oil) added to soften (i.e., to reduce the hardness of) the PET-G resin.

Soft PVC has been used as a representative material for soft vinyl products because of its excellences in processability and properties, including weather resistance, tensile strength, elongation, scratch resistance, adhesiveness, etc. But its use is becoming increasingly restricted or banned in recent years due to environmental issues. Nevertheless, the soft PVC is still the most widely used resin, for there is no alternative to it. Without alternatives, for example, vinyl synthetic leather is still used in wide range of applications, such as bags, construction materials, advertising materials, etc. Particularly, the vinyl synthetic leather, when used in combination with a textile, is difficult to recycle and thus mostly burned in garbage incinerators, leading to environmental problems and rising costs. As a solution to this problem, an alloy of a vegetable oil and eco-environmental resins, including PET-G resin, MBS resin and TPEE resin, can provide a composition with properties as good as to be used as an alternative to the soft PVC. The PVC is one of the most widely used resins, for it has high miscibility with liquid materials such as a plasticizer and high compatibility, and when softened, displays good properties and processability, enabling the production of soft products with high quality. But, the PET-G resin is hard to soften. Even when mixed with a vegetable oil having relatively good compatibility and softened, the PET-G resin does not provide a composition similar to the soft PVC due to the characteristics of the vegetable oil such as palm oil and is thus difficult to commercialize. In an attempt to overcome this problem, the MBS resin compatible with the PET-G resin, obtained in the powder form and ready to absorb oil and the TPEE resin having good properties in regards to heat resistance, cold resistance, etc. are used to reinforce the properties, and yet it is impossible to form a composition with properties as good as to replace the soft PVC. The WPI abstract of JP2007246910 A discloses a composition comprising PETG and MBS. Paraffin oil as a compatibilizer is not disclosed.

For compensating for the problem, the vegetable oil like palm oil is partly or wholly replaced by paraffin oil to obtain a composition superior to the soft PVC in regards to heat resistance, cold resistance, oil resistance, and processability. Palm oil is the most widely used vegetable oil, for it is very cheap and available.

The prior art cited as the background of the present invention includes Korean Patent Registration No. 1004614 under the title of "PETG-based Molding Deco Sheet Similar to PVC in Formability" (Patent Document 1). The prior art proposes "a deco sheet that includes a glycol-modified polyethylene terephthalate (PET-G) alloy resin having an elastomer resin alloyed with a PET-G resin, where the elastomer resin is the copolymer of a polybutylene terephthalate (PBT) resin and polyether glycol".

The prior art secures formability similar to that of PVC and enables the production of hard sheets, food containers, etc., but it is not applicable to produce soft films or soft sheets due to the difficulty of softening.

### Cross-Reference to Related Applications

### [Patent Document]

### (Patent Document 0001)

Korean Patent Registration No. 1004614 under the title of "PETG-based Molding Deco Sheet Similar to PVC in Formability".

### BRIEF SUMMARY OF THE INVENTION

The present invention is to solve the problems with the prior art and to provide a soft PET-G resin composition that uses paraffin oil or a mixture of paraffin oil and a vegetable oil in addition to a soft PET-G resin composition to enhance heat resistance, cold resistance, weather resistance, and printability, thereby securing good properties and processability, providing an alternative to soft PVC films or sheets as well as injection-molded products or extruded products using soft PVC, enabling the production of vinyl synthetic leathers or tarpaulin, expanding the use range to the applications difficult to process due to the defects of olefin (i.e., PP or PE) products or polyurethane products in regards to post-processability (high-frequency processability, printability, adhesiveness, etc.), and applying its use to the manufacture of infant or children's products without the use of a plasticizer.

The present invention is to provide a soft glycol-modified polyethylene terephthalate (PET-G) resin composition, comprising 10 to 150 parts by weight of paraffin oil with respect to 100 parts by weight of a PET-G resin.

The present invention is also to provide a soft PET-G resin composition further comprising 10 to 300 parts by weight of a methyl methacrylate butadiene styrene (MBS) resin.

The present invention is also to provide a soft PET-G resin composition further comprising 10 to 650 parts by weight of a thermoplastic polyester elastomer (TPEE) resin.

The present invention is also to provide a soft PET-G resin composition further comprising 10 to 150 parts by weight of a vegetable oil.

The present invention is also to provide a soft PET-G resin composition in which the vegetable oil is palm oil.

The soft PET-G resin composition according to the present invention uses paraffin oil or a mixture of paraffin oil and a vegetable oil in addition to a soft PET-G resin composition to enhance heat resistance, cold resistance, weather resistance, and printability, so it has very useful effects to secure good properties and processability, provide an alternative to soft PVC films or sheets as well as injection-molded products or extruded products using soft PVC, enable the production of vinyl synthetic leathers or tarpaulin, expand the use range to the applications which are difficult to process due to the defects of olefin (i.e., PP or PE) products or polyurethane products in regards to the post-processability (high-frequency processability, printability, adhesiveness, etc.), and apply its use to the manufacture of infant or children's products without the use of a plasticizer.

### DETAILED DESCRIPTION OF THE INVENTION

Hereinafter, the disclosure of the present invention will be described in further detail with reference to examples and experimental examples, which are given for the understanding of the disclosure of the present invention and not intended to limit the scope of the claims in the present invention.

The technical construction of the present invention will now be described in detail in accordance with the preferred embodiments of the present invention as follows.

The present invention is to improve properties, such as heat resistance, cold resistance, weather resistance, and printability, by using paraffin oil or a mixture of paraffin oil and a vegetable oil in addition to a soft PET-G resin composition.

The present invention may use a PET-G resin as a base resin and further a MBS resin compatible with the PET-G resin and miscible with paraffin oil and a TPEE resin compatible with the PET-G resin, the MBS resin and paraffin oil and excellent in properties, in regards to cold resistance, heat resistance, weather resistance, etc., and processability.

The glycol-modified polyethylene terephthalate (PET-G) resin is known as an eco-friendly resin and chiefly used for hard sheets, food containers, or the like due to its low cost, and yet it is hard to use in the production of soft vinyl products like soft films or soft sheets because of its difficulty of softening.

For this reason, the methyl methacrylate butadiene styrene (MBS) resin and the thermoplastic polyester elastomer (TPEE) resin are added to reinforce the properties and processability of the PET-G resin. This can save the strengths of the PET-G resin, that is, eco-friendliness, weather resistance and clarity and offers good properties and post-processability by using the excellences of the MBS resin in regards to miscibility and compatibility with other resins and those of the TPEE resin in regards to heat resistance and cold resistance.

The MBS resin is primarily used as an impact modifier for hard PVC or engineering plastics. The MBS resin used as an impact modifier is miscible and compatible with other resins and thus used improve the properties and processability of other resins.

The TPEE resin is a resin that exhibits good properties, such as tensile strength at high temperature, chemical resistance, cold resistance, weather resistance, and processability, and low compression set. Preferably, the TPEE resin as used herein is a low-hardness TPEE resin with low melting temperature.

The soft PET-G resin composition with improved properties according to the present invention includes 5 to 150 parts by weight of paraffin oil with respect to 100 parts by weight of the PET-G rein.

### <Example 1>

**[Table 1] Composition Example (unit: kg)**

| Ingredient | Experimental Example | | | | | |
|---|---|---|---|---|---|---|
| | 1 | 2 | 3 | 4 | 5 | 6 |
| *MBS | 100 | 100 | 100 | 100 | 100 | 100 |
| Paraffin oil | 50 | 70 | 100 | 120 | 150 | 180 |
| Miscibility | Good | Good | Good | Good | Good | Poor |

| | | | | | | |
|---|---|---|---|---|---|---|
| Note) *(1) MBS resin is Kane Ace M-511 manufactured by Kaneka Corp. in Japan. | | | | | | |

The soft PVC resin is prepared by adding a plasticizer to the PVC resin. The important factors in this process are miscibility and compatibility between the PVC resin and the plasticizer. Poor miscibility and compatibility leads to deterioration in the properties and processability and makes it difficult to produce PVC products or to acquire good quality for the composition even if the composition is prepared in success. The PVC resin is available in the form of powder with pores, so it can easily absorb the plasticizer with a super-mixer alone. In contrast, the PET-G resin and the TPEE resin are commercially available in the pellet form and thus have the difficulty in absorbing oil. In Example 1, the MBS resin in the powder form is subjected to an experiment to evaluate the compatibility and miscibility in the same processing procedure of PVC. In this composition, the MBS resin is the focal resin.

As already known from the general experimental results, the good compatibility with the MBS resin leads to the good compatibility with the PET-G and TPEE resins. The compatibility and miscibility between the MBS resin and paraffin oil is thus of great importance.

Referring to Experimental Examples 1 to 6 of Table 1, paraffin oil is added in an increasing amount from 50 phr to 180 phr step by step into the super mixer. According to the evaluation results, all the experimental examples except for Experimental Example 6 show excellences in compatibility and miscibility. In Experimental Example 6, a serious bleeding of oil appears due to an excess of oil. In Experimental Example 5, the composition is provided in the powder form with a little cohesion, which is expected to improve by adding the TPEE or PET-G resin. Such a composition with a little cohesion as in Experimental Example 5 that uses 150 parts by weight of paraffin oil with respect to 100 parts by weight of the MBS resin is considered to have good compatibility and miscibility. It is also considered that the oil has a softening effect while mixed with the other resins, provided that the added amount of the oil is at least 50 parts by weight.

### <Example 2>

**[Table 2] Composition Example (unit: kg)**

| Ingredient | Experimental Example | | | | | | | |
|---|---|---|---|---|---|---|---|---|
| | 1 | 2 | 3 | 4 | 5 | 6 | 7 | 8 |
| PET-G | 100 | 100 | 100 | 100 | 100 | 100 | 100 | 100 |
| MBS | 0 | 10 | 20 | 40 | 60 | 80 | 100 | 100 |
| Paraffin oil | 10 | 10 | 20 | 40 | 60 | 80 | 100 | 120 |
| Miscibility, miscibility | Poor | Good | Good | Good | Good | Good | Good | Good |

It is shown from the experimental examples of Example 1, the MBS resin is fairly compatible and miscible with paraffin oil. Example 2 is to evaluate the compatibility between the PET-G resin used as a base rein and paraffin oil as given in Table 2. In Experimental Example 1, 10 parts by weight of paraffin oil is alloyed with 100 parts by weight of the PET-G resin in a 30mm TWIN extruder capable of oil impregnation. This shows that the paraffin oil is compatible but not miscible with the PET-G resin.

As a solution to this problem, Experimental Examples 2 to 8 display good compatibility and miscibility between the paraffin oil and the PET-G resin.

It is possible to prepare a composition with good compatibility and miscibility by using an intermediary agent that is the MBS resin in this case, where the MBS resin is compatible and miscible with both PET-G and Paraffin oil. In Experimental Examples 7 and 8, the compositions exhibit an A hardness of 82±3, nearly equivalent to the hardness of soft PVC (70 phr), and has cold resistance and heat resistance greatly enhanced in relation to palm oil, but poor processability and tensile strength. The composition of Experimental Example 1 shows serious efflorescence. In Experimental Examples 2 and 3, efflorescence is observed but considered to be removable.

### <Example 3>

**[Table 3] Composition Example (unit: kg)**

| Ingredient | Experimental Example | | | | | |
|---|---|---|---|---|---|---|
| | 1 | 2 | 3 | 4 | 5 | 6 |
| MBS | 100 | 100 | 100 | 100 | 100 | 100 |
| *TPEE | 10 | 30 | 50 | 80 | 100 | 120 |
| Paraffin oil | 100 | 100 | 100 | 100 | 100 | 100 |
| Compatibility | Good | Good | Good | Good | Good | Good |
| Miscibility | Good | Good | Good | Good | Good | Good |

| | | | | | | |
|---|---|---|---|---|---|---|
| Note) *(1) Thermoplastic polyester elastomer (TPEE) resin is Item No. KP3340 manufactured by Kolon Industries in Korea. | | | | | | |

The TPEE resin is a resin with high tensile strength at high temperature, low compression set, and excellences in cold resistance, heat resistance, weather resistance, and processability. The TPEE resin is compatible and miscible with other resins, and yet it is expensive.

In the experiments of <Example 1>, each specimen is prepared and subjected to a bleeding test (kept in an oven at 60 °C 8 hours a day for consecutive 3 days and then subjected to visual inspection), showing that mixing 100 phr of paraffin oil and 100 phr of MBS offers the most economical and stable composition. In Example 3, the TPEE resin is added in an increasing amount from 10 phr to 120 phr to the mixture containing 100 phr of paraffin oil and 100 phr of MBS. An inspection on the composition shows that the composition has good miscible with the mixture of the MBS resin and paraffin oil. As can be seen from the experiments, paraffin oil is available as an alternative to palm oil and that the composition using paraffin oil is superior in properties to the composition using palm oil as a vegetable oil but has a bleeding of oil.

In Experimental Examples 5 and 6, the compositions display good properties, such as A hardness of about 70, and yet they are poor in tensile strength and elongation in relation to the composition using palm oil.

In Experimental Example 3 of Example 1, the composition using a mixture of paraffin oil and MBS resin at a mixing ratio of 1:1 shows greatly improved properties in regards to heat resistance, cold resistance, etc. but also poor processability, in relation to the composition using palm oil.

### <Example 4>

**[Table 4] Composition Example (unit: kg)**

| Ingredient | Experimental Example | | | | | |
|---|---|---|---|---|---|---|
| | 1 | 2 | 3 | 4 | 5 | 6 |
| PET-G | 100 | 100 | 100 | 100 | 100 | 100 |
| MBS | 10 | 20 | 40 | 60 | 80 | 100 |
| TPEE | 10 | 20 | 50 | 80 | 100 | 120 |
| Paraffin oil | 10 | 20 | 40 | 60 | 80 | 100 |
| Compatibility, Miscibility | Poor | Poor | Poor | Poor | Good | Good |

Soft PVC is mixed with an antioxidant or a UV absorber depending on its use purpose to reinforce the weather resistance and used to manufacture outdoor products. For use in the cold areas or winter season, a cold-resistant plasticizer like DOA is added to resist the cold weather. For heat resistance, a heat-resistant plasticizer like TOTP is used in various applications.

PET-G or TPEE resins are eco-friendly resins with good properties and processability. Unlike PVC, they are limited in the use of additives. The TPEE resin is fairly compatible with other resins, whereas the PET-G resin has an extremely limited compatibility with other resins. As can be seen from the experimental results of Example 3, the MBS resin or the TPEE resin fairly compatible with paraffin oil and PET-G is used as an intermediary agent (i.e., a compatibility enhancer) to improve the properties in an attempt to improve the phenomenon like efflorescence or poor processability. For reduction of the production cost, it is desirable to increase the amount of the PET-G resin that is cheap and effective to improve properties and to decrease the amount of the TPEE resin that is expensive, as possible.

According to an evaluation of the change in the properties caused by increasing the amount of the TPEE resin step by step in Experimental Examples 1 to 6, the processability is greatly improved from Experimental Example 1 to Experimental Example 6, while the specimen of Experimental Example 1 has a little efflorescence and the film-like specimen of Experimental Example 2 has efflorescence to some extent after an elongation. The specimens of Experimental Examples 3 and 4 display good properties in regards to cold resistance, heat resistance, weather resistance, etc. but remain to be improved due to a little poor processability in relation to the PET-G composition using palm oil. Using an excess of the TPEE resin, the specimens of Experimental Examples 5 and 6 have good properties and processability.

### <Example 5>

**[Table 5] Composition Example (unit: kg)**

| Ingredient | Experimental Example | | | | | | | | | |
|---|---|---|---|---|---|---|---|---|---|---|
| | 1 | 2 | 3 | 4 | 5 | 6 | 7 | 8 | 9 | 10 |
| PET-G | 100 | 100 | 100 | 100 | 100 | 100 | 100 | 100 | 100 | 100 |
| MBS | 10 | 15 | 20 | 40 | 60 | 80 | 100 | 100 | 100 | 100 |
| Paraffin oil | 10 | 5 | 10 | 20 | 30 | 40 | 50 | 40 | 30 | 20 |
| Palm oil | 3 | 5 | 10 | 20 | 30 | 40 | 50 | 60 | 70 | 80 |
| Compatibility, miscibility | Poor | Poor | Good | Good | Good | Good | Good | Good | Good | Good |
| Processability | Good | Good | Good | Good | Good | Good | Good | Good | Good | Good |

* The oil used for experiments is palm oil that is a vegetable oil.

Palm oil is susceptible to oxidization and sensitive to resins or heat, so it has deterioration in weather resistance when mixed with other resins. And, an increased amount of the palm oil results in cohesion. But, the palm oil is fairly compatible and miscible with the PET-G or MBS resin and likely to have a great increase in the effect to improve the properties and processability by an addition of the TPEE resin. According to the experiments of Example 4, the paraffin oil has no great effect to improve the processability in relation to palm oil. Referring to Table 5, the addition of palm oil greatly improves the properties and processability in relation to Example 3, and the use of the TPEE resin may provide a composition with properties and processability as good as the soft PVC. In Experimental Examples 1 and 2, the compositions have good processability and a little deterioration in compatibility and miscibility. Experimental Example 1 shows that a small amount of palm oil has no great effect to improve the properties. The composition of Experimental Example 2 is greatly improved in the efflorescence. This shows that a composition having good properties can be prepared with an addition of the TPEE resin. The compositions of Experimental Examples 3 to 10 are more improved in the processability than those of Example 3. According to Experimental Examples 8, 9 and 10, the composition containing an increased amount of palm oil and a reduced amount of paraffin oil down to 20 parts by weight is improved in the properties, such as heat resistance, cold resistance, etc., and displays hardness decreased to A80±3, in relation to the composition having the addition of palm oil alone.

### <Example 6>

**[Table 6] Composition Example (unit: kg)**

| Ingredient | Experimental Example | | | | | |
|---|---|---|---|---|---|---|
| | 1 | 2 | 3 | 4 | 5 | 6 |
| PET-G | 100 | 100 | 100 | 100 | 100 | 100 |
| MBS | 5 | 10 | 15 | 30 | 60 | 60 |
| TPEE | 5 | 10 | 15 | 15 | 40 | 80 |
| Paraffin oil | 5 | 10 | 15 | 15 | 30 | 30 |
| Palm oil | 5 | 10 | 15 | 15 | 30 | 30 |
| Hardness | D70±3 | D62±3 | D60±3 | D60±3 | A86±3 | A84±3 |
| Properties | Efflorescence | Efflorescence | Bleeding | Good | Good | Good |

As can be seen from the experimental results of Examples 1 to 5, it is expected to obtain a composition superior in properties to the soft PVC by using the advantages of the added substances, that is, good compatibility and miscibility of the MBS resin, good compatibility, miscibility and properties of the TPEE resin, good properties of the paraffin oil, and good compatibility and miscibility of palm oil. Based on this conception, experiments are performed as given in Table 6.

A thin soft PVC film generally uses soft PVC with D hardness of about 70±3 (plasticizer content: 20 phr). In Experimental Example 1, the D hardness is about 70±3, which is nearly equivalent to that of soft PVC 20 phr, and efflorescence is observed. In Experimental Example 2, the properties and processability are greatly improved, but a little efflorescence appears. In Experimental Example 3, the processability and properties are good, with bleeding (oil moved to the surface) observed two months after the preparation of the specimen. Considering that 200 parts by weight of oil (paraffin oil plus palm oil) is used with respect to 100 parts by weight of the MBS resin, a major determinant in moving the oil to the surface is not the proportion of the oil in the whole mixture but the mixed amount of the oil with respect to the MBS resin. It is also considered that adding 100 phr of oil to 100 phr of the MBS resin offers the most stable composition, so the composition of Experimental Example 4 has no bleeding of oil.

In general, PVC vinyl synthetic leather, tarpaulin and soft sheets have A hardness of about 80 to 85 (60 phr to 80 phr of PVC). In Experimental Example 5, a slight blooming is observed two months after the preparation of the specimen. It is considered that blooming or bleeding occurs when the oil content is greater than the amount of oil absorbed by the resin and that the PET-G resin is incapable of absorbing paraffin oil. In order to prepare a composition similar in properties to the TPEE resin as possible, the added amount of the TPEE resin is increased. As can be seen from the results of Experimental Example 6 in which the added amount of the TPEE is increased, the composition is superior in properties to the soft PVC and has no blooming. Generally, bleeding is observable after exposure to the environment of 60 to 70 °C for 72 to 144 hours or so, whereas blooming appears after at least one month of exposure.

### <Example 7>

**[Table 7] Composition Example (unit: kg)**

| Ingredient | Experimental Example | | | | | | | |
|---|---|---|---|---|---|---|---|---|
| | 1 | 2 | 3 | 4 | 5 | 6 | 7 | 8 |
| PET-G | 100 | 100 | 100 | 100 | 100 | 100 | 100 | 100 |
| MBS | 10 | 20 | 60 | 60 | 100 | 100 | 100 | 100 |
| TPEE | 10 | 40 | 80 | 120 | 120 | 180 | 220 | 260 |
| Paraffin oil | 10 | 10 | 60 | 60 | 50 | 50 | 50 | 50 |
| Palm oil | 10 | 10 | - | - | 50 | 50 | 50 | 50 |
| Hardness | D62±3 | D60±3 | A85±3 | A84±3 | A79±3 | A80±3 | A83±3 | A85±3 |
| Properties | Effl. | Good | Bloom -ing | Good | Bloom -ing | Good | Good | Good |
| Proportion of TPEE | 7.1% | 22.2% | 26.6% | 35.2% | 28.5% | 37.5% | 42.3% | 50% |

| | | | | | | | | |
|---|---|---|---|---|---|---|---|---|
| Note) Effl. : Efflorescence | | | | | | | | |

According to Experimental Example 6 of Example 6, the compositions are superior in the properties to the soft PVC but need to be improved in the properties for use in the manufacture of vinyl synthetic leathers, tarpaulin, vinyl sheets, or weather-resistant products with A harness below 80.

The easiest way to control the hardness in the manufacture of low-hardness products is changing the contents of oil and PET-G. In the method, it is necessary to take into consideration the side effects (particularly, bleeding or blooming) from the increased amount of oil and the rise of the production cost with the reduced amount of the PET-G resin and the increased amount of the TPEE resin.

Among the PET-G, MBS and TPEE resins, the TPEE resin is the most effective one used as a processing aid and modifier. Considering that efflorescence appears in the composition of Experimental Example 1, the added amount of the TPEE resin (10/140) is increased from 7.1 % to 23.5 % to secure good properties and low hardness. As the palm oil is a vegetable oil that is poor in weather resistance, a comparison is made between the composition of Experimental Example 3 using paraffin oil alone and the composition of Experimental Example 6 in Example 6 through the test for reinforcing the weather resistance. According to the results of Experimental Example 3, the composition has a little blooming and a slight increase in the hardness. This results from the fact that paraffin oil is inferior in compatibility to palm oil. In Experimental Example 4, the added amount of the TPEE resin is increased to 35.5 %, which leads to the preparation of a composition of good quality without blooming. In relation to palm oil, the paraffin oil has good properties, in regards to heat resistance, cold resistance, weather resistance, etc., but poor compatibility, and thus needs to increase the added amount of the TPEE resin to prevent the side effects such as bleeding or blooming. Further, the hardness increases when the added amount of the TPEE resin is 35 % or greater. The low-hardness soft PVC products have hardness of A80 or below. The content of the plasticizer is normally 80 phr or greater. In order to lower the hardness of the composition, it is necessary to increase the content of the oil and hence the content of the MSB resin. Such an increase in the contents of the oil and the MSB resin leads to an abrupt drop of the tensile strength or elongation and causes side effects like bleeding or blooming. On the contrary to PVC, it is thus difficult to reduce the hardness.

In Experimental Example 5, the oil and MSB contents are increased to cause a slight blooming and deterioration in the tensile strength and elongation.

The TPEE resin is the resin that is most excellent in properties among the thermoplastic elastomers (TPEs) but difficult to use due to its high price and difficulty of having low hardness (D hardness of 40 or below). For solving this problem, the added amount of the TPEE resin is increased to 50 % (260 parts by weight) in Experimental Examples 6, 7 and 8. The composition of Experimental Example 7 has the properties more enhanced than that of Experimental Example 6. Experimental Example 8 provides a soft composition with properties nearly as good as the TPEE resin and hardness of A85±3, which composition is hard to acquire with the TPEE resin alone. As can be seen from the experimental results of Example 7, increasing the added amount of the TPEE resin is the most effective method to prepare a composition with good quality.

### <Example 8>

**[Table 8] Composition Example (unit: kg)**

| Ingredient | Experimental Example | | | | | | |
|---|---|---|---|---|---|---|---|
| | 1 | 2 | 3 | 4 | 5 | 6 | 7,8 |
| PET-G | 100 | 80 | 60 | 40 | 60 | 40(100phr) | 0 |
| MBS | 120 | 100 | 100 | 100 | 120 | 120(300phr) | 100 |
| TPEE | 260 | 260 | 260 | 260 | 260 | 260(650phr) | 260 |
| Paraffin oil | 60 | 50 | 50 | 50 | 60 | 60(150phr) | 50 |
| Palm oil | 60 | 50 | 50 | 50 | 60 | 60(150phr) | 50 |
| Hardness A | 78 | 79 | 78 | 75 | 76 | 72 | 74 |
| Properties | Good | Good | Good | Good | Good | Good | Poor |
| Proportion of TPEE | 43.3% | 48.1% | 50% | 52% | 44.8% | 48.1% | 56.5% |

As can be seen from the experiments of Example 7, increasing the added amount of the TPEE resin is the most effective method to improve the properties of the composition according to the present invention. Thanks to the high hardness (D hardness of 40) of the TPEE resin, as shown in Experimental Example 8 of Example 7, an increase in the added amount of the TPEE resin enables the preparation of a composition having good properties, but with the higher hardness. Among the low-hardness soft PVC resins, the PVC containing 100 phr of a plasticizer has A hardness of 70 and is chiefly used for extruded or injection-molded products rather than films or vinyl sheets. For providing an alternative to the soft PVC resin, experiments are performed as given in Table 8. The method of reducing the hardness of the composition is increasing the oil content or reducing the added amount of the PET-G resin that is the hardest resin. As the increased oil content possibly causes bleeding or blooming, the experiments involve reducing the added amount of the PET-G resin that is the cheapest resin in the composition. In Experimental Example 1, the oil content is increased to 120 phr with respect to 100 phr of the PET-G resin, and the MBS content is increased to 120 phr in order to stabilize the properties. According to the results of Experimental Example 1, the composition displays stable properties without bleeding or blooming and has A hardness reduced to 78A, which is far lower than the hardness of 100 phr PVC. In Experimental Examples 2, 3 and 4, the content of the PET-G resin is reduced to obtain a composition having the hardness nearly as low as 90 phr PVC, as shown in Experimental Example 4. In Experimental Examples 5 and 6, the content of the PET-G resin is reduced, while the contents of the MBS resin and the oil are increased. The resultant compositions display good properties with the hardness of A72 nearly as low as 100 phr PVC, as in Experimental Example 6.

As can be seen from the experimental results of Table 8, it is possible to prepare a composition having hardness as low as 100 phr soft PVC by reducing the added amount of the PET-G resin and increasing the contents of the MBS resin, the TPEE resin and the oil. In Experimental Example 7, an evaluation of the composition not containing the PET-G resin in regards to the properties shows that the composition has deterioration in the tensile strength. Accordingly, the content of the PET-G resin is required to be at least 40 parts by weight of the PET-G resin in order to get a composition with good properties. Based on the experimental results of Examples 1 to 7, it is also expected to obtain a low-hardness composition by using the TPEE resin having good compatibility and miscibility with other resins as a main ingredient. For example, a mixture containing 20 phr of the PET-G resin, 50 phr of the MBS resin and 50 phr of oil in addition to 100 phr of the TPEE resin may provide a composition with a little good properties, low production cost and low hardness below D40, which is the current lowest hardness of the resin.

Accordingly, the soft PET-G resin composition may include, with respect to 100 parts by weight of the PET-G resin, 5 to 150 parts by weight of paraffin oil; 10 to 300 parts by weight of the MBS resin; 10 to 650 parts by weight of the TPEE resin; and 5 to 150 parts by weight of a vegetable oil.

The soft PET-G resin composition with improved properties according to the present invention uses paraffin oil or a mixture of paraffin oil and a vegetable oil in addition to a soft PET-G resin composition to enhance heat resistance, cold resistance, weather resistance, and printability, so it has very useful effects to secure good properties and processability, provide an alternative to soft PVC films or sheets as well as injection-molded products or extruded products using soft PVC, enable the production of vinyl synthetic leathers or tarpaulin, expand the use range to the applications which are difficult to process due to the defects of olefin products such as PP or PE products or polyurethane products in regards to the post-processability (high-frequency processability, printability, adhesiveness, etc.), and apply its use to the manufacture of infant or children's products without the use of a plasticizer.

The foregoing description of the invention has been presented for purposes of illustration and description, and obviously many modifications and variations are possible without departing from the principles and the substantial scope of the present invention. The scope of the claims of the present invention includes such modifications and variations belonging to the principles of the present invention.

## Claims

1. A soft glycol-modified polyethylene terephthalate (PET-G) resin composition, comprising 5 to 150 parts by weight of paraffin oil with respect to 100 parts by weight of a PET-G resin.

2. The soft PET-G resin composition as claimed in claim 1, wherein the soft PET-G resin composition further comprises 10 to 300 parts by weight of a methyl methacrylate butadiene styrene (MBS) resin.

3. The soft PET-G resin composition as claimed in claim 1 or 2, wherein the soft PET-G resin composition further comprises 10 to 650 parts by weight of a thermoplastic polyester elastomer (TPEE) resin.

4. The soft PET-G resin composition as claimed in any of the previous claims, wherein the soft PET-G resin composition further comprises 10 to 150 parts by weight of a vegetable oil.

5. The soft PET-G resin composition as claimed in claim 4, wherein the vegetable oil is palm oil.

## Patentansprüche

1. Mit weichem Glykol modifizierte Polyethykenterephthalat- (PET-G) Harzzusammensetzung, umfassend 5 bis 150 Gewichtsteile Paraffinöl, mit Bezug auf 100 Gewichtsteile eines PET-G-Harzes.

2. Weich-PET-G-Harzzusammensetzung nach Anspruch 1, wobei die Weich-PET-G-Harzzusammensetzung ferner 10 bis 300 Gewichtsteile eines Methylmethacrylat-Butadien-Styrol- (MBS-) Harzes umfasst.

3. Weich-PET-G-Harzzusammensetzung nach Anspruch 1 oder 2, wobei die Weich-PET-G-Harzzusammensetzung ferner 10 bis 650 Gewichtsteile eines thermoplastischen Polyesterelastomer- (TPEE-) Harzes umfasst.

4. Weich-PET-G-Harzzusammensetzung nach irgendeinem der vorhergehenden Ansprüche, wobei die Weich-PET-G-Harzzusammensetzung ferner 10 bis 150 Gewichtsteile eines Pflanzenöls umfasst.

5. Weich-PET-G-Harzzusammensetzung nach Anspruch 4, wobei das Pflanzenöl Palmöl ist.

## Revendications

1. Composition de résine polyéthylène téréphtalate modifiée au glycol (PET-G), molle, comprenant de 5 à 150 parties en poids d'huile de paraffine par rapport à 100 parties en poids de résine PET-G.

2. Composition de résine PET-G molle selon la revendication 1, où la composition de résine PET-G molle comprend en outre de 10 à 300 parties en poids de résine méthyl méthacrylate butadiène styrène (MBS).

3. Composition de résine PET-G molle selon la revendication 1 ou 2, où la composition de résine PET-G molle comprend en outre de 10 à 650 parties en poids de résine polyester élastomère thermoplastique (TPEE).

4. Composition de résine PET-G molle selon l'une quelconque des revendications précédentes, où la composition de résine PET-G molle comprend en outre de 10 à 150 parties en poids d'huile végétale.

5. Composition de résine PET-G molle selon la revendication 4, dans laquelle l'huile végétale est de l'huile de palme.
